# EUROPEAN PATENT APPLICATION

(11) **EP 4 597 797 A1**
(43) Date of publication of application: **06.08.2025**
(21) Application number: 25153906.0
(22) Date of filing: 24.01.2025
(51) Int. Cl.: H02K 1/24, H02K 1/276, H02K 7/04

(54) **ROTOR**

(30) Priority: 31.01.2024 JP 2024013352
(71) Applicant: TOYOTA JIDOSHA KABUSHIKI KAISHA, Aichi-ken, 471-8571 (JP)
(72) Inventor: OHIRA, Kengo, Toyota-shi,, 471-8571 (JP); NODA, Ken, Toyota-shi,, 471-8571 (JP); TOMONAGA, Takeshi, Toyota-shi,, 471-8571 (JP); TAKAMURA, Yasuyuki, Toyota-shi,, 471-8571 (JP); YOSHIKAWA, Makoto, Toyota-shi,, 471-8571 (JP)
(74) Representative: J A Kemp LLP

(57) **Abstract**

A rotor (10; 100; 200) of an electric motor, includes: a first rotor core (14; 214) including a permanent magnet (15b); and a second rotor core (16; 116) that is adjacent to the first rotor core (14; 214) in an axial direction and does not include the permanent magnet (15b). The second rotor core (16; 116) includes a group of magnetic path forming holes (24; 124) that form a magnetic path for providing saliency to the second rotor core (16; 116), and a balance adjusting portion (26; 126) that is provided at at least one point in a circumferential direction and locally increases or decreases a mass of the second rotor core (16; 116).

## Description

### BACKGROUND OF THE INVENTION

### 1. Field of the Invention

The present disclosure relates to a rotor.

### 2. Description of Related Art

Japanese Unexamined Patent Application Publication No. 2010-206884 (JP 2010-206884 A) discloses a rotor. The rotor includes a rotor core in which a permanent magnet is disposed, and end plates that are disposed on both end surfaces of the rotor core in an axial direction and in which no permanent magnet is disposed. A balance adjusting portion is provided in the end plate. The balance adjusting portion is a local cut-out portion and is provided in a part of the end plate in a circumferential direction to adjust a mass balance of the rotor in the circumferential direction.

In the rotor described above, no magnet is disposed in the end plate, so that the end plate does not contribute so much to magnetic characteristics of the rotor. However, in a case where the end plate is omitted, the balance adjusting portion needs to be provided in the rotor core. In this case, in a case where the rotor core is provided with a cut-out portion as the balance adjusting portion, there is concern that the rotor core interferes with the magnet. Alternatively, in a case where a mass body is applied to the rotor core as the balance adjusting portion, there is concern that a magnetic flux by the magnet is affected. Therefore, from the viewpoint of providing the balance adjusting portion, it is considered that the presence of the end plate is effective. On the other hand, the presence of the end plate that does not contribute to the magnetic characteristics leads to unnecessary increase in a size of the rotor.

### SUMMARY OF THE INVENTION

A first aspect of the invention relates to a rotor of an electric motor including a first rotor core and a second rotor core. The first rotor core includes a permanent magnet. The second rotor core is adjacent to the first rotor core in an axial direction and does not include the permanent magnet. The second rotor core includes a first group of magnetic path forming holes configured to form a first magnetic path for providing saliency to the second rotor core, and a balance adjusting portion that is provided at at least one point in a circumferential direction and is configured to locally increase or decrease a mass of the second rotor core.

In the rotor described above, the balance adjusting portion is provided in the second rotor core in which no permanent magnet is disposed. As a result, the balance adjusting portion is avoided or suppressed from interfering with the permanent magnet of the first rotor core or affecting a magnetic flux of the permanent magnet. Furthermore, the group of magnetic path forming holes is provided in the second rotor core. The group of magnetic path forming hole forms a magnetic path for providing saliency to the second rotor core. With such a configuration, the second rotor core can generate a reluctance torque in a magnetic field generated by a stator. As a result, a torque output by the electric motor is improved. Therefore, it is also possible to reduce a size of the first rotor core by taking into consideration the reluctance torque by the second rotor core. As described above, according to the technology disclosed in the present specification, it is possible to improve magnetic characteristics of the rotor while the balance adjusting portion is provided in the rotor, and thus it is possible to reduce a size of the rotor.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a cross-sectional view of a rotor of Example 1;
FIG. 2 is an end view of a first rotor core taken along line II-II of FIG. 1;
FIG. 3 is an end view of a second rotor core taken along line III-III of FIG. 1;
FIG. 4 is an end view of a third rotor core taken along line IV-IV of FIG. 1;
FIG. 5 is a cross-sectional view of a rotor of Example 2;
FIG. 6 is an end view of a second rotor core taken along line VI-VI of FIG. 5;
FIG. 7 is an end view of a third rotor core taken along line VII-VII of FIG. 5; and
FIG. 8 is a cross-sectional view of a rotor of Example 3.

### DETAILED DESCRIPTION OF EMBODIMENTS

As described above, a rotor of an electric motor may include a first rotor core in which a permanent magnet is disposed and a second rotor core that is adjacent to the first rotor core in an axial direction and in which no permanent magnet is disposed. The second rotor core may include a first group of magnetic path forming holes configured to form a first magnetic path for providing saliency to the second rotor core, and a balance adjusting portion that is provided at at least one point in a circumferential direction and is configured to locally increase or decrease a mass of the second rotor core.

The first group of magnetic path forming holes may include a slit extending along the first magnetic path. With such a configuration, the generation of a leakage flux in the magnetic path is suppressed, and the second rotor core can effectively generate a reluctance torque.

The balance adjusting portion may be provided radially inward of the first group of magnetic path forming holes in a first end surface of the second rotor core in the axial direction. With such a configuration, the balance adjusting portion can be provided in a range with relatively high strength in which the group of magnetic path forming holes is not present, in the second rotor core.

The balance adjusting portion may include a balance adjusting hole provided in the first end surface of the second rotor core in the axial direction. With such a configuration, for example, the balance adjusting hole can be easily formed in the second rotor core by cutting using a drill or the like.

The first group of magnetic path forming holes may include point-shaped holes arranged along the first magnetic path. Also with such a configuration, the second rotor core can generate a reluctance torque.

The balance adjusting portion may include a balance adjusting hole provided in an outer circumference surface of the second rotor core. In a case where the balance adjusting hole is provided in the outer circumference surface of the second rotor core, there is concern that the balance adjusting hole reaches any one of the groups of magnetic path forming holes. In this case, depending on a form of the balance adjusting hole, it is also conceivable that rigidity or strength of the second rotor core is unintentionally decreased. In this regard, in a case where the magnetic path forming hole reached by the balance adjusting hole is the point-shaped hole that is relatively small compared to the slit, the decrease in rigidity or strength of the second rotor core is suppressed. Therefore, the balance adjusting hole can be provided at an appropriate position in the outer circumference surface regardless of a relative position with respect to the group of magnetic path forming holes.

The balance adjusting hole may reach at least one of the point-shaped holes of the first group of magnetic path forming holes. However, in another embodiment, the balance adjusting hole may not reach the at least one of the point-shaped holes of the one group of magnetic path forming holes. Even in a case where the balance adjusting hole is simply adjacent to the magnetic path forming hole, the decrease in rigidity or strength of the second rotor core is suppressed as long as the magnetic path forming hole is the point-shaped hole that is relatively small.

The first group of magnetic path forming holes may further include a slit extending along the first magnetic path. In this case, the point-shaped holes may be located radially outward of the slit. With such a configuration, in a range where the interference with the balance adjusting hole is not a problem, the reluctance torque of the second rotor core can be effectively generated by configuring the magnetic path forming holes with the slit.

The balance adjusting hole may not reach the slit of the first group of magnetic path forming holes.

The balance adjusting portion may be provided radially inward of the first group of magnetic path forming holes in the first end surface of the second rotor core in the axial direction. That is, regardless of a specific configuration of the group of magnetic path forming holes as described above, the balance adjusting portion may be provided in an end surface of the second rotor core on one side.

The balance adjusting portion may be provided in the outer circumference surface of the second rotor core. That is, regardless of the specific configuration of the group of magnetic path forming holes as described above, the balance adjusting portion may be provided in the outer circumference surface of the second rotor core.

The balance adjusting portion may be located at a center of a d-axis of the saliency by the first group of the magnetic path forming holes. With such a configuration, an influence of the presence of the balance adjusting portion on the magnetic path can be reduced.

The second rotor core may be adjacent to a first end surface of the first rotor core in the axial direction. With such a configuration, the second rotor core can also function as an end plate in a motor in the related art at the corresponding end surface of the first rotor core.

The rotor may further include a third rotor core adjacent to a second end surface of the first rotor core in the axial direction. In this case, the third rotor core may include a second group of magnetic path forming holes that form a second magnetic path for providing saliency to the third rotor core. With such a configuration, the third rotor core can also function in the same manner as the second rotor core described above on the other side of the first rotor core in the axial direction.

The third rotor core may further include a balance adjusting portion that is provided at at least one point in the circumferential direction and is configured to locally increase or decrease a mass of the third rotor core. With such a configuration, the balance adjusting portion can be disposed on both sides of the rotor in the axial direction, and for example, a size of each of the balance adjusting portions can be reduced.

The balance adjusting portion of the second rotor core and the balance adjusting portion of the third rotor core may have the same position in the circumferential direction. Such a configuration is effective in terms of adjusting static balance of the rotor. However, as another embodiment, the balance adjusting portion of the second rotor core and the balance adjusting portion of the third rotor core may have different positions in the circumferential direction. Such a configuration is effective in terms of adjusting couple balance of the rotor.

The first rotor core may be separated into a first portion and a second portion in the axial direction. In this case, the second rotor core may be located between the first portion and the second portion of the first rotor core in the axial direction. The balance adjusting portion may be provided in an outer circumference surface of the second rotor core. With such a configuration, the second rotor core can be disposed near a center of mass of the entire rotor in the axial direction. As a result, when the balance adjusting portion is provided in the second rotor core, an influence on the couple balance of the rotor can be reduced.

Hereinafter, representative and non-limiting specific examples of the present invention will be described in detail with reference to the drawings. The detailed description is merely intended to show details for implementing the preferred examples of the present invention to those skilled in the art, and is not intended to limit the scope of the present invention. In addition, the following additional features and inventions can be used separately or together with other features and inventions in order to provide a further improved rotor.

The combination of the features and the steps disclosed in the following detailed description is not essential for carrying out the present invention in the broadest sense, and is described solely for the purpose of describing a typical specific example of the present invention. Furthermore, various features of the above and below representative specific examples, and various features of those described in the independent and dependent claims do not have to be combined as described herein or in the order listed in order to provide additional and useful embodiments of the present invention.

It is intended that all the features described in the present specification and/or the claims are disclosed individually and independently as limitations for the disclosure and the claimed specific matters in the initial application, separately from the configuration of the features described in the examples and/or the claims. Furthermore, the description of all numerical ranges and groups or sets is made with the intention of disclosing the intermediate configurations as a limitation for the disclosure and the specific matters claimed in the initial application.

### EXAMPLE 1

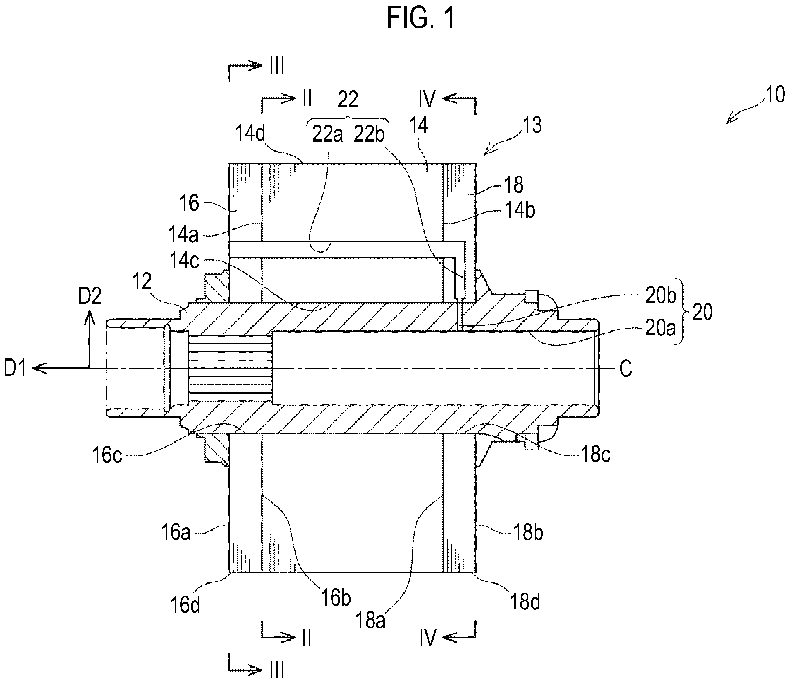

A rotor 10 of Example 1 will be described with reference to FIGS. 1 to 4. In one example, the rotor 10 is adopted in an electric motor that drives an electrified vehicle. As shown in FIG. 1, the rotor 10 includes a shaft 12 and a rotor core 13. The shaft 12 extends along a center axis C of the rotor 10. The shaft 12 passes through the rotor core 13. The rotor core 13 is a generally cylindrical member and extends along the center axis C. The rotor core 13 is fixed to the shaft 12 and rotates together with the shaft 12 around the center axis C as a rotation center. The rotor core 13 includes a first rotor core 14, a second rotor core 16, and a third rotor core 18.

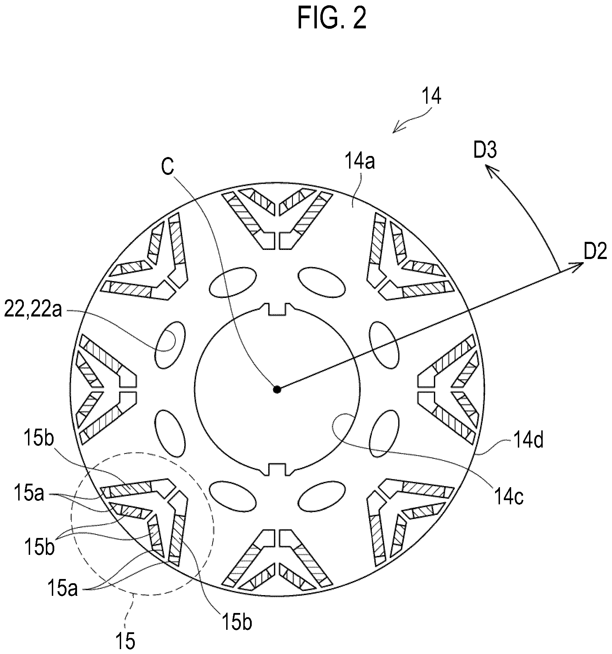

Here, in the present specification, a cylindrical coordinate system including an axial direction, a radial direction, and a circumferential direction is defined with the center axis C of the rotor 10 as a reference. The axial direction is a direction parallel to the center axis C and is defined by a coordinate axis D1 parallel to the center axis C (see FIG. 1). In the present specification, a positive direction of the coordinate axis D1 may be expressed as one side in the axial direction, and a negative direction of the coordinate axis D1 may be expressed as the other side in the axial direction. The radial direction is a direction perpendicular to the center axis C, and is defined by a coordinate axis D2 with the center axis C as an origin. In the present specification, a positive direction of the coordinate axis D2 may be expressed as a radially outer side, and a negative direction of the coordinate axis D2 may be expressed as a radially inner side. The circumferential direction is a direction perpendicular to the axial direction and the radial direction and is defined by a coordinate axis D3 that revolves around the center axis C (see FIG. 2). In the present specification, a positive direction of the coordinate axis D3 may be expressed as one side in the circumferential direction, and a negative direction of the coordinate axis D3 may be expressed as the other side in the circumferential direction.

The first rotor core 14 is a cylindrical member. The first rotor core 14 includes a first end surface 14a located on one side in the axial direction and a second end surface 14b located on the other side in the axial direction. The first rotor core 14 extends between the first end surface 14a and the second end surface 14b. The first rotor core 14 includes an inner circumference surface 14c and an outer circumference surface 14d. The inner circumference surface 14c is a surface on a radially inner side of the first rotor core 14 and extends cylindrically along the circumferential direction. The inner circumference surface 14c defines a part of an inner circumference surface of the rotor core 13. The outer circumference surface 14d is a surface on a radially outer side of the first rotor core 14 and extends cylindrically along the circumferential direction. The outer circumference surface 14d defines a part of an outer circumference surface of the rotor core 13. The inner circumference surface 14c and the outer circumference surface 14d extend between the first end surface 14a and the second end surface 14b of the first rotor core 14.

The second rotor core 16 is adjacent to the first end surface 14a on one side in the axial direction of the first rotor core 14. With such a configuration, the second rotor core 16 can also function as an end plate in a motor in the related art at the first end surface 14a of the first rotor core 14. The third rotor core 18 is adjacent to the second end surface 14b on the other side of the first rotor core 14 in the axial direction. With such a configuration, the third rotor core 18 can function as an end plate of the first rotor core 14 on the other side in the axial direction of the first rotor core 14, similarly to the second rotor core 16.

The second rotor core 16 is a cylindrical member. The second rotor core 16 includes a first end surface 16a located on one side in the axial direction and a second end surface 16b located on the other side in the axial direction. The second rotor core 16 extends between the first end surface 16a and the second end surface 16b. A length of the second rotor core 16 in an axial direction is smaller than a length of the first rotor core 14 in the axial direction. The second rotor core 16 includes an inner circumference surface 16c and an outer circumference surface 16d. The inner circumference surface 16c is a surface on a radially inner side of the second rotor core 16 and extends cylindrically along the circumferential direction. The inner circumference surface 16c defines a part of the inner circumference surface of the rotor core 13. The outer circumference surface 16d is a surface on a radially outer side of the second rotor core 16 and extends cylindrically along the circumferential direction. The outer circumference surface 16d defines a part of the outer circumference surface of the rotor core 13. The inner circumference surface 16c and the outer circumference surface 16d extend between the first end surface 16a and the second end surface 16b of the second rotor core 16.

The third rotor core 18 is a cylindrical member. The third rotor core 18 can be configured similarly to the second rotor core 16, and includes a first end surface 18a on one side in the axial direction, a second end surface 18b on the other side in the axial direction, and an inner circumference surface 18c and an outer circumference surface 18d that extend between the first end surface 18a and the second end surface 18b.

The rotor 10 includes a shaft cooling flow path 20 and a plurality of core cooling flow paths 22 that communicate with the shaft cooling flow path 20. The shaft cooling flow path 20 is formed inside the shaft 12 and is a flow path that cools the shaft 12. The core cooling flow paths 22 are formed inside the rotor core 13 and are flow paths that cool the rotor core 13. A refrigerant for cooling the shaft 12 or the rotor core 13 flows through the shaft cooling flow path 20 and the core cooling flow paths 22. As the refrigerant, for example, a lubricating oil sealed in a casing of an electric motor is used.

The shaft cooling flow path 20 includes a shaft main portion 20a and a plurality of shaft communication portions 20b allow the shaft main portion 20a and the core cooling flow paths 22 to communicate with each other. The shaft main portion 20a extends along the center axis C inside the shaft 12. The shaft communication portions 20b extend radially from the shaft main portion 20a toward the radially outer side.

Each of the core cooling flow paths 22 includes a core main portion 22a and a core communication portion 22b that allows the core main portion 22a and the shaft cooling flow path 20 to communicate with each other. Each of the core main portions 22a extends along the center axis C inside the rotor core 13. The core communication portions 22b extend toward the radially inner side from the corresponding core main portions 22a. The core cooling flow paths 22 extend in the rotor core 13 from the shaft 12 to the end surface of the rotor core 13 on one side (that is, the first end surface 16a of the second rotor core 16). Specifically, the core communication portions 22b are formed inside the third rotor core 18. The core main portions 22a extend from the third rotor core 18 to the end surface 16a of the second rotor core 16 on one side. That is, the core main portions 22a extend from the third rotor core 18 across the first rotor core 14 and the second rotor core 16. Therefore, the refrigerant pumped by a pump into the shaft cooling flow path 20 passes through the shaft cooling flow path 20 and the core cooling flow path 22 and flows out from the first end surface 16a of the second rotor core 16. As a result, the shaft 12 and the rotor core 13 are effectively cooled.

Details of a configuration of the first rotor core 14 will be described with reference to FIGS. 1 and 2. As shown in FIG. 1 and FIG. 2, the first rotor core 14 is made up of laminated electromagnetic steel sheets. The first rotor core 14 includes a plurality of through-holes extending from the first end surface 14a to the second end surface 14b. The through-holes define a part of the core main portions 22a of the core cooling flow paths 22. The first rotor core 14 includes a plurality of magnet fixing portions 15 radially outward of the core cooling flow path 22. The magnet fixing portions 15 are disposed at equal intervals in the circumferential direction of the first rotor core 14. Each of the magnet fixing portions 15 includes a plurality of fixing holes 15a and a plurality of magnets 15b. Each of the fixing holes 15a extends from the first end surface 14a to the second end surface 14b. Each of the fixing holes 15a accommodates the corresponding magnet 15b. The magnet 15b is a generally rectangular parallelepiped-shaped permanent magnet. For each of the fixing holes 15a, a gap between the fixing hole 15a and the magnet 15b is filled with, for example, a resin. As a result, the magnet 15b is fixed to the fixing hole 15a. The magnets 15b have two pairs of magnets 15b disposed in the radial direction. The magnets 15b forming a pair are disposed such that a distance between the magnets 15b increases toward the radially outer side.

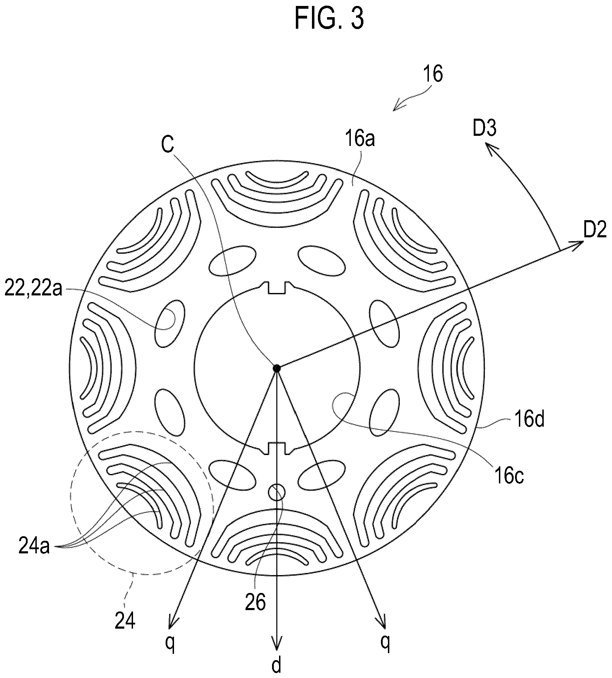

Details of a configuration of the second rotor core 16 will be described with reference to FIGS. 1 and 3. As shown in FIG. 1 and FIG. 3, the second rotor core 16 is made up of laminated electromagnetic steel sheets. The second rotor core 16 includes a plurality of through-holes extending from the first end surface 16a to the second end surface 16b. The through-holes define a part of the core main portions 22a of the core cooling flow paths 22. A group of magnetic path forming holes 24 is repeatedly provided along the circumferential direction in the second rotor core 16. In one example, the group of magnetic path forming holes 24 is constituted by a plurality of slits 24a. Each of the slits 24a has, for example, a substantially arc shape protruding radially outward. The group of magnetic path forming holes 24 forms a magnetic path for providing saliency to the second rotor core 16. A plurality of groups of magnetic path forming holes 24 is provided, and the groups of magnetic path forming holes 24 are disposed at equal intervals in the circumferential direction of the second rotor core 16.

Here, in the present specification, a direction of a magnetic flux of the magnetic path formed by the groups of magnetic path forming holes 24 is defined as a q-axis, and a direction electrically and magnetically orthogonal to the q-axis is defined as a d-axis.

The second rotor core 16 is further provided with a balance adjusting hole 26. The balance adjusting hole 26 is formed to locally decrease a mass of the second rotor core 16. The balance adjusting hole 26 is provided in the first end surface 16a of the second rotor core 16 on one side in the axial direction. With such a configuration, for example, the balance adjusting hole 26 can be easily formed in the second rotor core 16 by cutting using a drill or the like. The balance adjusting hole 26 is provided at one point in the circumferential direction. However, in another embodiment, the balance adjusting hole 26 may be provided at a plurality of points in the circumferential direction.

Specifically, the balance adjusting hole 26 is provided radially inward of the groups of magnetic path forming holes 24 in the first end surface 16a of the second rotor core 16 on one side in the axial direction. With such a configuration, the balance adjusting hole 26 can be provided in a range with relatively high strength in which the group of magnetic path forming holes 24 is not present, in the second rotor core 16. More specifically, the balance adjusting hole 26 is provided at a position different from the through-holes of the core main portion 22a of the core cooling flow paths 22 on the radially inner side of the second rotor core 16. More specifically, a distance of the balance adjusting hole 26 from the center axis C is substantially equal to distances of the core main portions 22a of the core cooling flow paths 22 from the center axis C. The balance adjusting hole 26 is located between two adjacent core main portions 22a of the core cooling flow paths 22.

In one example, the balance adjusting hole 26 has a bottom surface between the first end surface 16a and the second end surface 16b. The balance adjusting hole 26 extends between the first end surface 16a and the bottom surface. However, a specific configuration of the balance adjusting hole 26 is not particularly limited. In another embodiment, the balance adjusting hole 26 may be a through-hole and may extend from the first end surface 16a to the second end surface 16b. A diameter and a depth of the balance adjusting hole 26 are determined according to unbalance generated in the rotor 10.

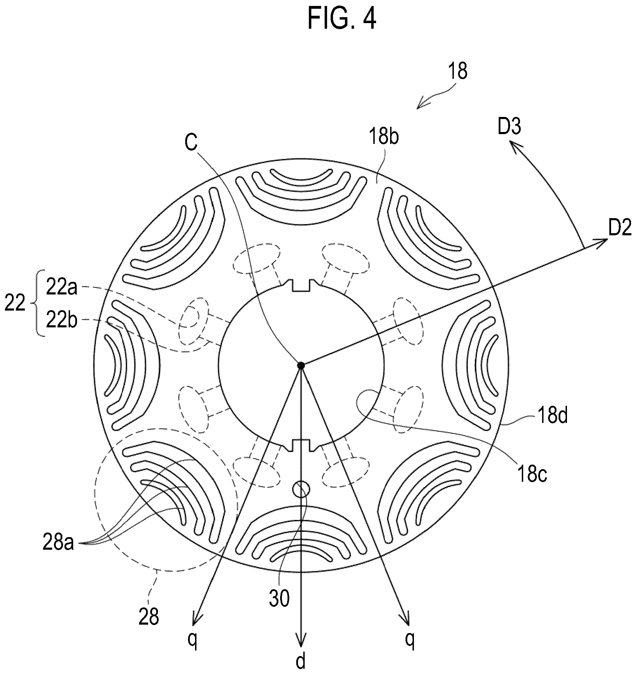

Details of a configuration of the third rotor core 18 will be described with reference to FIGS. 1 and 4. As shown in FIG. 1 and FIG. 4, the third rotor core 18 is made up of laminated electromagnetic steel sheets. The third rotor core 18 includes a plurality of through-holes extending from the first end surface 18a to the inner circumference surface 18c. The through-holes define a part of the core main portion 22a and the core communication portion 22b in each of the core cooling flow paths 22. The third rotor core 18 includes a plurality of groups of magnetic path forming holes 28 and a balance adjusting hole 30. The groups of magnetic path forming holes 28 form a magnetic path for providing saliency to the third rotor core 18. The groups of magnetic path forming holes 28 are disposed at equal intervals in the circumferential direction of the third rotor core 18. Each of the groups of magnetic path forming holes 28 of the third rotor core 18 includes a plurality of slits 28a, similarly to the second rotor core 16.

The balance adjusting hole 30 of the third rotor core 18 is formed to locally decrease a mass of the third rotor core 18. The balance adjusting hole 30 of the third rotor core 18 is configured similarly to the balance adjusting hole 26 of the second rotor core 16. The balance adjusting hole 30 is provided radially inward of the groups of magnetic path forming holes 28 in the second end surface 18b of the third rotor core 18 on the other side of the axial direction. The balance adjusting hole 30 is a bottomed hole having a bottom surface between the second end surface 18b and the first end surface 18a, and is configured similarly to the balance adjusting hole 26 of the second rotor core 16. The balance adjusting hole 30 is provided at one point in the circumferential direction. More specifically, the balance adjusting hole 26 of the second rotor core 16 and the balance adjusting hole 30 of the third rotor core 18 have the same position in the circumferential direction. Such a configuration is effective in terms of adjusting static balance of the rotor 10. However, as another embodiment, the balance adjusting hole 26 of the second rotor core 16 and the balance adjusting hole 30 of the third rotor core 18 may have different positions in the circumferential direction. Such a configuration is effective in terms of adjusting couple balance of the rotor 10.

In the rotor 10 described above, the balance adjusting hole 26 is provided in the second rotor core 16 in which no permanent magnet is disposed. As a result, the balance adjusting hole 26 is avoided or suppressed from interfering with the permanent magnet of the first rotor core 14 or affecting a magnetic flux of the permanent magnet. In addition, the groups of magnetic path forming holes 24 are provided in the second rotor core 16. The groups of magnetic path forming holes 24 form a magnetic path for providing saliency to the second rotor core 16. With such a configuration, the second rotor core 16 can generate a reluctance torque in a magnetic field generated by a stator. As a result, a torque output by the electric motor is improved. Therefore, it is also possible to reduce a size of the first rotor core 14 by taking into consideration the reluctance torque by the second rotor core 16. As described above, according to the technology disclosed in the present specification, it is possible to improve magnetic characteristics of the rotor 10 while the balance adjusting hole 26 is provided in the rotor 10, and thus it is possible to reduce the size of the rotor 10.

In particular, each of the groups of magnetic path forming holes 24 in this example includes the slits 24a extending along the magnetic path. With such a configuration, the generation of a leakage flux in the magnetic path is suppressed, and the second rotor core 16 can effectively generate a reluctance torque. Each of the slits 24a extends continuously along one magnetic path. However, a shape of the slit 24a is not limited thereto. Each of the slits 24a may extend intermittently along one magnetic path. Even with such a configuration, the second rotor core 16 can effectively generate a reluctance torque. However, the slit 24a that extends continuously along one magnetic path is relatively advantageous in terms of suppressing the leakage flux.

Furthermore, in the rotor 10 in this example, the balance adjusting hole 30 is also provided in the third rotor core 18 as well as in the second rotor core 16. With such a configuration, the balance adjusting holes 26, 30 can be disposed on both sides of the rotor 10 in the axial direction, and for example, a size of each of the balance adjusting holes 26, 30 can be reduced.

The balance adjusting holes 26, 30 in this example are examples of the "balance adjusting portion" in the present technology.

### EXAMPLE 2

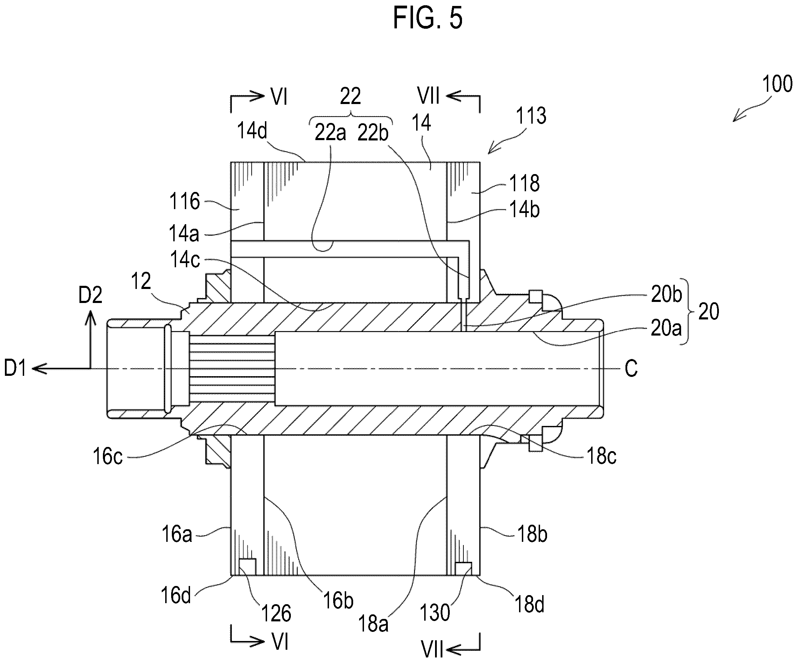

A rotor 100 of Example 2 will be described with reference to FIGS. 5 to 7. As shown in FIGS. 5 to 7, a rotor core 113 of the rotor 100 of Example 2 includes a second rotor core 116, a third rotor core 118, and the first rotor core 14 as in Example 1. The second rotor core 116 includes a plurality of groups of magnetic path forming holes 124 and a balance adjusting hole 126, and this configuration is different from that of the second rotor core 16 in Example 1. The third rotor core 118 includes a plurality of groups of magnetic path forming holes 128 and a balance adjusting hole 130, and this configuration is different from that of the third rotor core 18 in Example 1. Other configurations of the rotor 100 according to Example 2 can be similar to those of the rotor 10 according to Example 1.

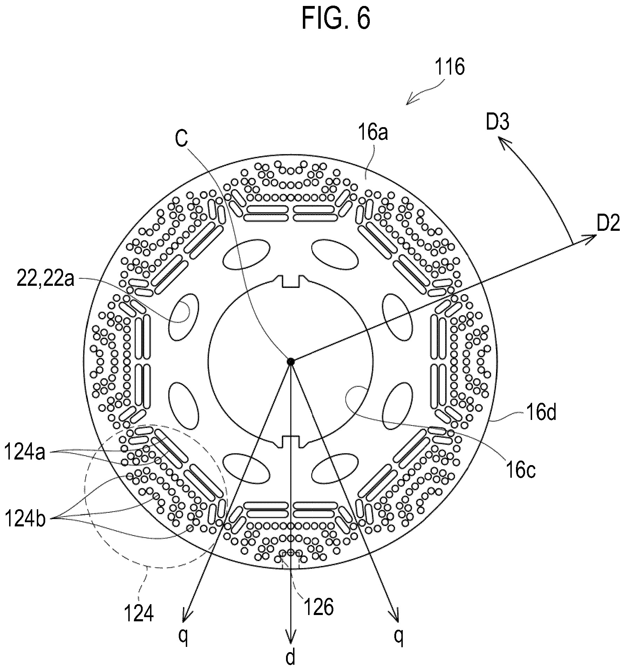

The second rotor core 116 will be described with reference to FIGS. 5 and 6. As described above, as shown in FIGS. 5 and 6, the second rotor core 116 includes the groups of magnetic path forming holes 124 and the balance adjusting hole 126. The groups of magnetic path forming holes 124 form a magnetic path for providing saliency to the second rotor core 116. Each of the groups of magnetic path forming holes 124 of the second rotor core 116 includes a slit 124a that intermittently extend along the magnetic path and a plurality of point-shaped holes 124b arranged along the magnetic path. The point-shaped holes 124b may be located radially outward of the slit 124a. The point-shaped holes 124b may be disposed in the second rotor core 116 within a range of, for example, a length of about 25 mm from the outer circumference surface 16d. In one example, the slit 124a extends in a curved manner to protrude radially inward. The point-shaped holes 124b are arranged in a curve shape curved to protrude radially inward.

The balance adjusting hole 126 is formed to locally decrease a mass of the second rotor core 116. The balance adjusting hole 126 is provided in the outer circumference surface 16d of the second rotor core 116. The balance adjusting hole 126 reaches the point-shaped holes 124b of the groups of magnetic path forming holes 124. The number of the point-shaped holes 124b reached by the balance adjusting hole 126 is not limited to two or more, and may be one. The balance adjusting hole 126 is located at a center of a d-axis of the saliency by each of the groups of the magnetic path forming holes 124. With such a configuration, an influence of the presence of the balance adjusting portion on the magnetic path can be reduced.

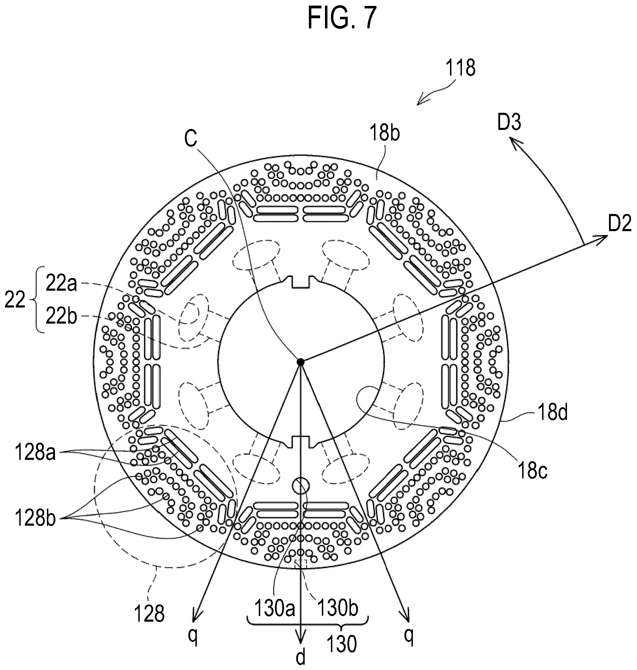

The third rotor core 118 will be described with reference to FIG. 5 and FIG. 7. As described above, as shown in FIGS. 5 and 7, the third rotor core 118 includes the groups of magnetic path forming holes 128 and the balance adjusting hole 130. Each of the groups of magnetic path forming holes 128 can be configured similarly to the second rotor core 116, and includes a slit 128a that intermittently extends along the magnetic path and a plurality of point-shaped holes 128b arranged along the magnetic path.

The balance adjusting hole 130 is provided at one point in the circumferential direction, and is formed to locally decrease a mass of the third rotor core 118. The balance adjusting hole 130 includes a first balance adjusting hole 130a and a second balance adjusting hole 130b. The first balance adjusting hole 130a is provided in the second end surface 18b of the third rotor core 118 on one side in the axial direction. In one example, the first balance adjusting hole 130a is a bottomed hole, has a bottom surface between the second end surface 18b and the first end surface 18a, and extends from the bottom surface to the second end surface 18b. The second balance adjusting hole 130b is provided in the outer circumference surface 18d of the third rotor core 118. The second balance adjusting hole 130b does not reach the point-shaped holes 128b of the groups of magnetic path forming holes 128. That is, a radial length of the second balance adjusting hole 130b is smaller than a radial length of the balance adjusting hole 126 of the second rotor core 116. In the third rotor core 118, the mass of the third rotor core 118 reduced by the second balance adjusting hole 130b can be reduced to the extent that the first balance adjusting hole 130a is provided.

In this example, the groups of magnetic path forming holes 124, 128 include the point-shaped holes 124b and 128b arranged along the magnetic paths. Also with such a configuration, each of the second rotor core 116 and the third rotor core 118 can generate a reluctance torque.

Furthermore, the balance adjusting holes 126, 130b in this example are provided in the outer circumference surfaces 16d and 18d of the second rotor core 116 and the third rotor core 118, respectively. As in the second rotor core 116 in this example, in a case where the balance adjusting hole 126 is provided in the outer circumference surface 16d of the second rotor core 116, there is concern that the balance adjusting hole 126 reaches any one of the groups of magnetic path forming holes 124. In this case, depending on a form of the balance adjusting hole 126, it is also conceivable that rigidity or strength of the second rotor core 116 is unintentionally decreased. In this regard, as in the second rotor core 116, in a case where the magnetic path forming hole 124 reached by the balance adjusting hole 126 is the point-shaped hole 124b that is relatively small compared to a case of having the slit 124a, the decrease in rigidity or strength of the second rotor core 116 is suppressed. Therefore, the balance adjusting hole 126 can be provided at an appropriate position in the outer circumference surface 16d regardless of a relative position with respect to each of the groups of magnetic path forming holes 124.

However, the second balance adjusting hole 130b of the third rotor core 118 does not reach at least one of the point-shaped holes 128b of the groups of magnetic path forming holes 128. Even in a case where the second balance adjusting hole 130b is simply adjacent to the magnetic path forming hole 128, the decrease in rigidity or strength of the third rotor core 118 is suppressed as long as the magnetic path forming hole 128 is the point-shaped hole 128b that is relatively small.

Furthermore, the groups of magnetic path forming holes 124, 128 in this example may further include the slits 124a and 128a that extend along the magnetic path. In this case, the point-shaped holes 124b and 128b are located radially outward of the slits 124a and 128a. With such a configuration, in a range in which the interference with the balance adjusting holes 126, 130b is not a problem, the reluctance torque of each of the second rotor core 116 and the third rotor core 118 can be effectively generated by configuring the magnetic path forming holes 124, 128 with the slits 124a and 128a.

The balance adjusting holes 126, 130 in this example are examples of the "balance adjusting portion" in the present technology. The balance adjusting portion is not limited to the balance adjusting holes 126, 130 that locally decrease the masses of the rotor cores 116, 118. The balance adjusting portion may be a portion that locally increases or decreases the mass of each of the rotor cores 116, 118. For example, in a case where the balance adjusting portion is provided in the outer circumference surfaces 16d and 18d as in this example, the balance adjusting portion as another embodiment may be a mass body applied to the second rotor core 116 to locally increase the mass of each of the rotor cores 116, 118. The mass body may be, for example, a clip-shaped mass body attached to cause the outer circumference surface 16d to be sandwiched between the first end surface 16a and the second end surface 16b of the second rotor core 16. The balance adjusting portion is not limited to one point in the circumferential direction, and a plurality of balance adjusting portions may be provided in the circumferential direction.

### EXAMPLE 3

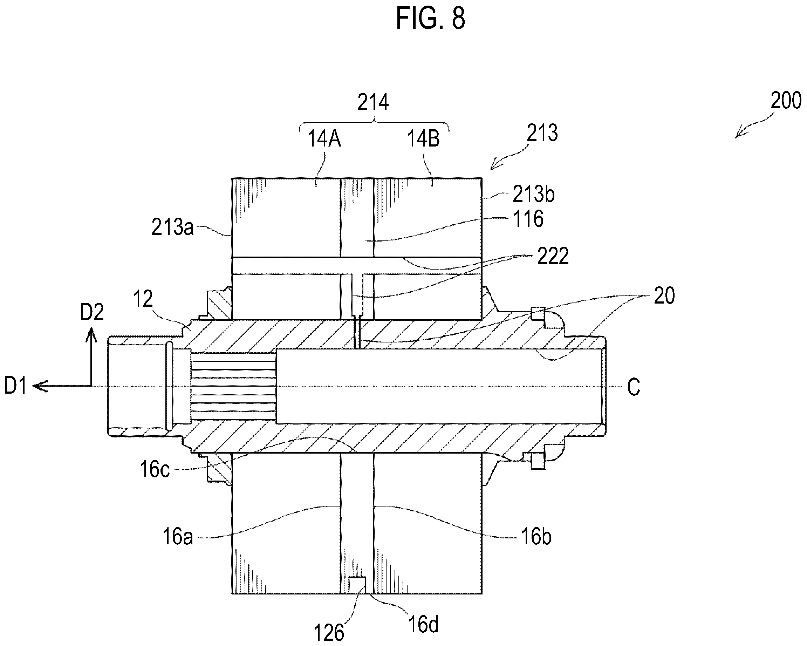

A rotor 200 of Example 3 will be described with reference to FIG. 8. As shown in FIG. 8, a rotor core 213 of the rotor 200 of Example 3 includes a first rotor core 214, and the second rotor core 116 as in Example 2. The first rotor core 214 is separated into a first portion 14A and a second portion 14B. Each of the first portion 14A and the second portion 14B can be configured similarly to the first rotor core 14 of Example 1. The second rotor core 116 is located between the first portion 14A and the second portion 14B. In this regard, the rotor 200 of Example 3 is different from the rotor 10 of Example 1. In addition, as described above, the balance adjusting hole 126 of the second rotor core 116 is provided in the outer circumference surface 16d. With such a configuration, the second rotor core 116 can be disposed near a center of mass of the entire rotor 200 in the axial direction. As a result, when the balance adjusting hole 126 is provided in the second rotor core 116, an influence on couple balance of the rotor 200 can be reduced.

Although not particularly limited, the rotor 200 in this example includes a plurality of core cooling flow paths 222 and the shaft cooling flow path 20 as in Example 1. The core cooling flow paths 222 extend in the rotor core 213 from the shaft 12 to end surfaces 213a and 213b of the rotor core 213 on both sides in the axial direction. With such a configuration, the rotor core 213 can be efficiently cooled over the entire range in the axial direction.

Although specific configurations of the groups of magnetic path forming holes have been described in Examples 1 and 2, a configuration according to the group of magnetic path forming holes in the present technology is not limited thereto. For example, in the second rotor core 16 of Example 1, the balance adjusting portion may be provided in the outer circumference surface 16d. In the second rotor core 116 of Example 2, the balance adjusting portion may be provided radially inward of the group of magnetic path forming holes 24 in the first end surface 16a of the second rotor core 116 on one side in the axial direction. The same as for the second rotor core 16, 116 may be applied to the third rotor core 18, 118.

## Claims

1. A rotor (10; 100; 200) of an electric motor, the rotor comprising:
a first rotor core (14; 214) including a permanent magnet (15b); and
a second rotor core (16; 116) adjacent to the first rotor core (14; 214) in an axial direction and not including the permanent magnet (15b),
wherein the second rotor core (16; 116) includes
a first group of magnetic path forming holes (24; 124) configured to form a first magnetic path for providing saliency to the second rotor core (16; 116), and
a balance adjusting portion (26; 126) that is provided at at least one point in a circumferential direction and is configured to locally increase or decrease a mass of the second rotor core (16; 116).

2. The rotor (10; 100; 200) according to claim 1, wherein the first group of magnetic path forming holes (24; 124) includes a slit (24a; 124a) extending along the first magnetic path.

3. The rotor (10; 100; 200) according to claim 2, wherein the balance adjusting portion (26; 126) is provided radially inward of the first group of magnetic path forming holes (24; 124) in a first end surface (16a) of the second rotor core (16; 116) in the axial direction.

4. The rotor (10; 100; 200) according to claim 3, wherein the balance adjusting portion (26; 126) includes a balance adjusting hole (26; 126) provided in the first end surface (16a) of the second rotor core (16; 116) in the axial direction.

5. The rotor (100) according to claim 1, wherein the first group of magnetic path forming holes (124) includes point-shaped holes (124b) arranged along the first magnetic path.

6. The rotor (100) according to claim 5, wherein the balance adjusting portion (126) includes a balance adjusting hole (126) provided in an outer circumference surface of the second rotor core (16; 116).

7. The rotor (100) according to claim 6, wherein the balance adjusting hole (126) reaches at least one of the point-shaped holes (124b) of the first group of magnetic path forming holes (124).

8. The rotor (100) according to claim 7, wherein:
the first group of magnetic path forming holes (124) further includes a slit (124a) extending along the first magnetic path; and
the point-shaped holes (124b) are located radially outward of the slit (124a).

9. The rotor (100) according to claim 8, wherein the balance adjusting hole (126) does not reach the slit (124a) of the first group of magnetic path forming holes (124).

10. The rotor (10; 100) according to claim 1, wherein the balance adjusting portion (26; 126) is provided radially inward of the first group of magnetic path forming holes (24; 124) in a first end surface of the second rotor core (16; 116) in the axial direction.

11. The rotor (10; 100) according to claim 1, wherein the balance adjusting portion (26; 126) is provided in an outer circumference surface of the second rotor core (16; 116).

12. The rotor (10; 100) according to claim 11, wherein the balance adjusting portion (26; 126) is located at a center of a d-axis of the saliency by the first group of the magnetic path forming holes (24; 124).

13. The rotor (10; 100) according to claim 1, wherein the second rotor core (16; 116) is adjacent to a first end surface of the first rotor core (14; 214) in the axial direction.

14. The rotor (10; 100) according to claim 13, further comprising a third rotor core (18; 118) adjacent to a second end surface of the first rotor core (14; 214) in the axial direction,
wherein the third rotor core (18; 118) includes a second group of magnetic path forming holes (28; 128) configured to form a second magnetic path for providing saliency to the third rotor core (18; 118).

15. The rotor (10; 100) according to claim 14, wherein the third rotor core (18; 118) further includes a balance adjusting portion (30; 130) that is provided at at least one point in the circumferential direction and is configured to locally increase or decrease a mass of the third rotor core (18; 118).
